# EUROPÄISCHE PATENTSCHRIFT

(11) **EP 0 822 761 B1**
(45) Veröffentlichungstag und Bekanntmachung des Hinweises auf die Patenterteilung: **08.12.1999**
(21) Anmeldenummer: 96910022.1
(22) Anmeldetag: 04.04.1996
(51) Int. Cl.: A41H 37/00, B30B 15/14

(54) **VORRICHTUNG BZW. STEUERUNG FÜR EINE VORRICHTUNG ZUM ANSETZEN VON NIETEN**
DEVICE FOR FITTING RIVETS OR CONTROL THEREFORE
DISPOSITIF DE POSE DE RIVETS OU COMMANDE POUR UN TEL DISPOSITIF

(30) Priorität: 04.05.1995 DE 19516345
(43) Veröffentlichungstag der Anmeldung: 11.02.1998
(73) Patentinhaber: William Prym GmbH & Co. KG, 52224 Stolberg (DE)
(72) Erfinder: SAMULOWITZ, Helmut, D-52223 Stolberg (DE); HARDT, Manfred, D-52224 Stolberg (DE)
(74) Vertreter: Grundmann, Dirk, Dr.
(86) Internationale Anmeldenummer: EP9601475
(87) Internationale Veröffentlichungsnummer: WO9634541

(56) Entgegenhaltungen:
- DE-A- 2 505 380
- DE-A- 3 819 090
- GB-A- 2 040 507
- US-A- 4 246 523
- US-A- 4 625 850
- US-A- 4 741 466

## Beschreibung

Die Erfindung betrifft eine Vorrichtung zum Ansetzen von Nieten, Knöpfen oder dergleichen gemäß Gattungsbegriff des Anspruchs 1 sowie eine Steuerung für eine derartige Vorrichtung.

Eine solche Vorrichtung ist vom Dokument US-A-4 741 466 bekannt.

Ansetzmaschinen zum Ansetzen von Nieten, Knöpfen oder dergleichen sind im Stand der Technik bekannt. Bei derartigen Maschinen ist in der Regel ein Oberwerkzeug und ein Oberwerkzeug vorhanden. Dem Oberwerkzeug ist ein Stößel zugeordnet. Der Stößel wirkt zusammen mit einer Kurvenscheibe. Die Form der Kurve auf der Kurvenscheibe bestimmt den Bewegungsverlauf des Stößels. Die Kurvenscheibe wird von einem Elektromotor angetrieben, die zeitliche Bewegungsabfolge, insbesondere die Taktrate des Stößelhubes werden von der Drehzahl des Elektromotors bestimmt. In der Regel weisen die bekannten Ansetzvorrichtungen einen Fingerschutz auf, dieser besteht aus einem Tastglied, welches ertastet, ob zwischen dem Oberwerkzeug und der Textilie ein Gegenstand, insbesondere ein Finger liegt. Wird ein solcher Gegenstand dort ertastet, so tritt augenblicklich eine Bremse in Wirkung, die den Motor stillsetzt, so daß der Stößel auf seiner Bewegungsbahn verharrt.

Wenn mit einer derartigen bekannten Ansetzvorrichtung eine Vielzahl von Nieten oder dergleichen innerhalb einer Sequenz angesetzt werden sollen, so wird ein Schalter, insbesondere ein Fußschalter betätigt, der den Motor anlaufen läßt. Die Taktrate wird von der Drehzahl des Motors bestimmt. In vielen Fällen ist es wünschenswert, die Taktrate zu beeinflussen, insbesondere zu reduzieren. Bei Maschinen des Standes der Technik läßt man hierzu den Motor entsprechend langsamer laufen. Dies geht einher mit einer Reduzierung der Abwärtsgeschwindigkeit des Stößels und damit mit einer Beeinflussung der Nietgeschwindigkeit. Die Qualität der Vernietung bzw. Ansetzung ist dadurch nicht gleichbleibend.

Der Erfindung liegt die Aufgabe zugrunde, eine gattungsgemäße Vorrichtung gebrauchsvorteilhaft weiterzubilden.

Gelöst wird die Aufgabe durch die im Anspruch 1 angegebene Erfindung.

Unteransprüche stellen vorteilhafte Weiterbildungen dar.

Zufolge der erfindungsgemäßen Ausgestaltung ist eine Vorrichtung gegeben, bei der der Stößel unabhängig von der Taktrate immer mit derselben, voreingestellten Geschwindigkeit abwärts verlagert wird. Die Taktrate wird jetzt durch ein kurzzeitiges Anhalten der Vorrichtung im oberen Totpunkt der Stößelstellung eingestellt. Dabei liegt die Wartezeit des Antriebs im Bereich von Millisekunden. Bevorzugt wird der Motor von einer elektronischen Steuereinrichtung angetrieben, welche mittels Sensormitteln oder dergleichen die Motorstellung, insbesondere die obere Totpunktstellung des Stößels ermittelt. Erreicht der Antrieb die obere Stößelstellung, bewirkt die elektronische Steuereinrichtung ein sofortiges Unterbrechen der Motorstromzufuhr und ein Abbremsen des Motors. Zum Abbremsen des Motors kann eine Wirbelstrombremse oder eine Reibbremse vorgesehen sein. Nach dem Verstreichen der Wartezeit wird die Bremswirkung aufgehoben und die Stromversorgung zum Motor wieder aufgenommen. Die elektronische Steuereinheit kann einen Mikroprozessor oder einen Mikrocontroller enthalten. Es ist eine Tasteneingabe vorgesehen. Hierzu können im elektronischen Steuerteil eine Aufzähl- und eine Abzähltaste vorgesehen sein. Durch deren Betätigung bei einem bestimmten Programmenü kann die Wartezeit in Schritten eingestellt werden. Die Schrittweite beträgt bevorzugt 10 Millisekunden. Die Wartezeit ist vorzugsweise in einem Bereich von 0-990 Millisekungen einstellbar. Die elektronische Steuereinheit kann ferner Zählwerke beinhalten. Ein erstes Zählwerk kann dabei die in einer Sequenz erfolgenden Ansetzungen zählen. Ein zweites Zählwerk dient zur Anzeige der von der Vorrichtung insgesamt geleisteten Arbeitshübe. Die Anzeige kann über ein elektronisches Display erfolgen. Es ist weiter erfindungsgemäß vorgesehen, daß die elektronische Steuereinheit ebenfalls den Motor-Nennstromm programmieren kann. Bei einem bestimmten Programmenü läßt sich der Motor durch Tastenbetätigung der am Aufstellort vorhandenen Netzspannung anpassen. Es ist vorgesehen, daß innerhalb einer Ansetzsequenz auch eine Vielzahl unterschiedlicher Artikel hintereinander in einer bestimmten Reihenfolge angesetzt werden können. Liegen die Artikel in unterschiedlichen Abständen auf der Textilie zueinander, so kann ferner vorgesehen sein, daß jedem Arbeitshub innerhalb einer Sequenz eine individuelle Wartezeit zugeordnet werden kann. Die Artikel werden über bekannte Förder- und Zuführvorrichtungen dem Ober- und Unterwerkzeug zugeführt.

Nachstehend wird ein Ausführungsbeispiel der Erfindung anhand der Zeichnungen erläutert. Es zeigt:
- Fig. 1: teils in Seitenansicht , teils im Horizontalschnitt die Vorrichtung in der oberen Totpunktstellung des Stößels,
- Fig. 2: einen Ausschnitt der Vorrichtung im Bereich des Unterwerkzeuges und des Oberwerkzeuges, ebenfalls in der oberen Totpunktstellung des Stößels,
- Fig. 3: eine Frontansicht der Fig. 1, wobei die Magazine dargestellt sind,
- Fig. 4: teils in Frontansicht, teils im vertikalen Längsschnitt die Vorrichtung gemäß der oberen Totpunktstellung des Stößels,
- Fig. 5: eine der Fig. 1 entsprechende Darstellung, wobei sich Haltezange und Stößel in Abwärtsrichtung verlagert haben bei sich zwischen Haltezange und Textilie erstreckendem Finger einer Bedienungsperson,
- Fig. 6: die entsprechende Ausschnittsvergrößerung in dieser Stellung,
- Fig. 7: die Frontansicht der Vorrichtung gemäß dieser Position der Haltezange,
- Fig. 8: die Herausvergrößerung der Frontansicht im Bereich der Werkzeuge, ebenfalls mit sich zwischen Haltezange und Unterwerkzeug erstreckendem Finger,
- Fig. 9: eine der Fig. 1 analoge Darstellung nach durchgeführter erster Absenkbewegung der Haltezange unter Erreichen der Abstandsstellung zum Unterwerkzeug,
- Fig. 10: zu Fig. 9 die Herausvergrößerung der Abstandsstellung der Haltezange zum Unterwerkzeug,
- Fig. 11: eine der Fig. 3 entsprechende Darstellung, wobei die Haltezange ihre Fingerschutz-Abstandsstellung erreicht hat,
- Fig. 12: die Herausvergrößerung der Fig. 11 im Bereich der Werkzeuge,
- Fig. 13: die der Fig. 1 entsprechende Darstellung, jedoch mit die Nietstellung einnehmenden Werkzeugen,
- Fig. 14: die Herausvergrößerung der Fig. 13 im Bereich der Werkzeuge;
- Fig. 15: die Frontansicht der Vorrichtung, teilweise geschnitten, in der Nietstellung,
- Fig. 16: die zugehörige Herausvergrößerung der Fig. 15 im Bereich der Werkzeuge und
- Fig. 17: ein Bewegungsdiagramm des Stößels, der Haltezange und des Unterwerkzeuges.

Die in Form einer Maschine ausgebildete Vorrichtung besitzt einen von einer Fußplatte 1 getragenen, vertikal ausgerichteten Ständer 2. Letzterer ist Träger einer Montageplatte 3. Diese weist eine entgegen Uhrzeigerrichtung um 90° gekippte U-Form auf, deren unterer U-Schenkel einen Ausleger 4 darstellt. An seinem freien Ende haltert dieser ein Unterwerkzeug 5. Letzteres besitzt einen im Querschnitt kreisförmigen Amboß 6, dessen oberes Ende ein Artikel-Unterteil 7 aufnimmt.

Aufbewahrt sind die Artikel-Unterteile 7 in einem seitlich der Montageplatte 3 angeordneten Magazin 8, von welchem schräg in Richtung des Auslegers 4 abwärts gerichtet eine Teile-Zuführungsschiene 9 ausgeht. Bezüglich der Artikel-Unterteile 7 handelt es sich um mit Zacken versehene Halteteile, die mit zwei verschiedenen Artikel-Oberteilen in Verbindung bringbar sind. Das eine Artikel-Oberteil 10 ist dargestellt. Es dient als Funktionsteil und ist mit dem Artikel-Unterteil 7 an eine Textilie 11 ansetzbar. Beide unterschiedlich gestalteten Artikel-Oberteile gelangen aus dem Magazin 8 gegenüberliegenden Magazinen 12, 13 über eine gemeinsame Teile-Zuführungsschiene 14 in den Bereich eines Ladeschiebers 15. Dieser ist horizontal verlagerbar und mit einer oberen Einschubleiste 16 und einer unteren Einschubleiste 17 versehen. Die obere Einschubleiste bringt jeweils ein Artikel-Oberteil 10 in eine Haltezange 18, während die untere Einschubleiste 17 die Artikel-Unterteile 7 in fluchtende Lage zum Amboß 6 des Unterwerkzeugs 5 bewegt. Mittels einer nicht veranschaulichten Elektromagnet-Steuerung können entweder die einen oder anderen Artikel-Oberteile 10 in den Bewegungsbereich der oberen Einschubleiste 16 gebracht werden.

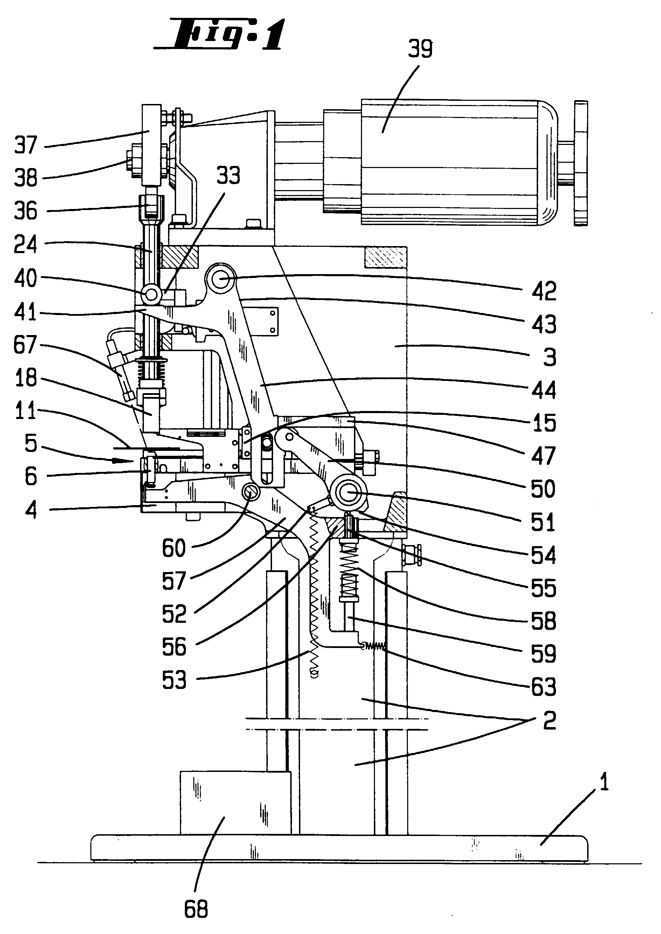

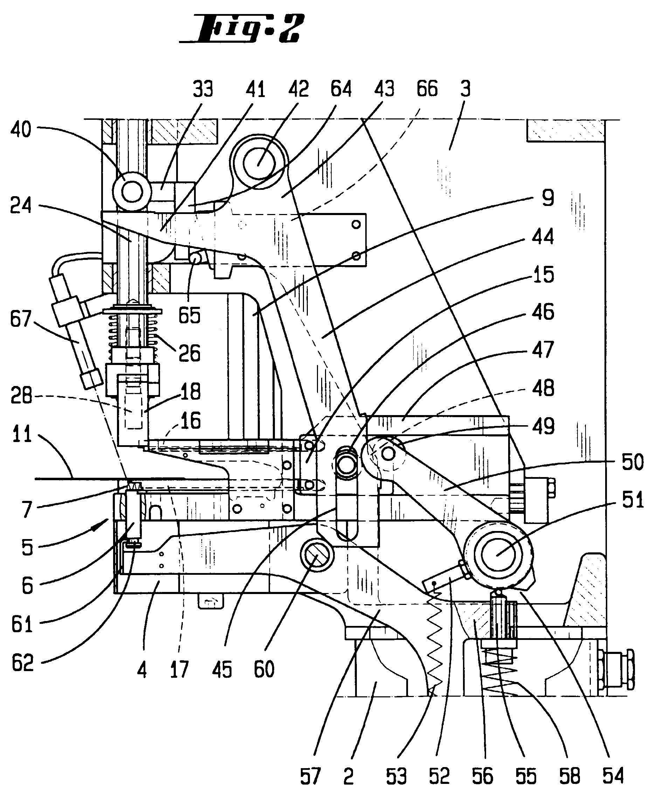

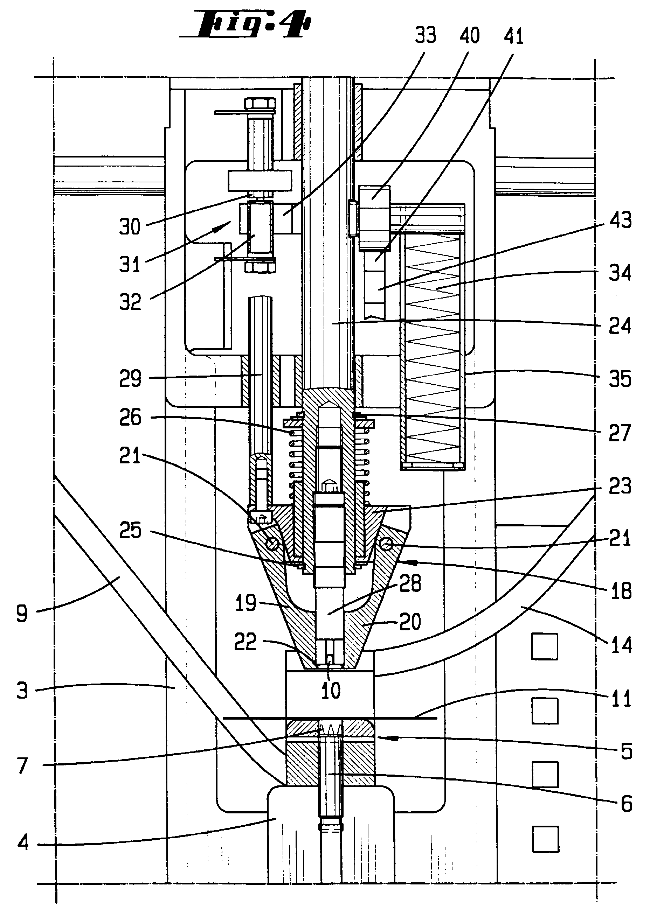

Die Haltezange 18 erstreckt sich in der Ausgangsstellung der Vorrichtung in fluchtender Gegenüberlage zum Unterwerkzeug 6. Gebildet wird die Haltezange 18 von zwei Zangenbacken 19, 20, die an ihren oberen Enden um Zapfen 21 verlagerbar sind. Eine nicht dargestellte Zugfeder belastet die Zangenbacken 19, 20 gegeneinander. An ihrem unteren Ende formen die Zangenbacken 19, 20 eine Aufnahme 22 für ein Artikel-Oberteil 10. In diese Aufnahme 22 wird das Artikel-Oberteil mittels der oberen Einschubleiste 16 eingebracht. Getragen sind die Zapfen 21 und damit die Haltezange 18 von einem Gleitstück 23, welches auf dem unteren Ende eines sich in Gegenüberlage zum Unterwerkzeug 5 erstreckenden Stößels 24 geführt ist. Die Abwärtsbewegung des Gleitstückes 23 ist durch eine Radialschulter 25 am unteren Ende des Stößels 24 begrenzt. Eine oberhalb des Gleitstückes 23 den Stößel 24 umgebende Schraubendruckfeder 26 belastet die Haltezange 18 in Abwärtsrichtung. Das obere Ende der Schraubendruckfeder 26 stützt sich ebenfalls an einer Radialschulter 27 des Stößels 24, welche Radialschulter mit Abstand zur unteren Radialschulter 25 angeordnet ist. Die Schraubendruckfeder 26 dient als Fingerschutzfeder und verhindert, daß bei Aufsetzen der Haltezange beispielsweise auf einen sich zwischen dieser und dem Unterwerkzeug erstreckenden Finger eine Verletzung desselben durch die Haltezange erfolgt. An seinem unteren Ende trägt der Stößel 24 ein Oberwerkzeug 28, welches in der oberen Totpunktstellung des Stößels gemäß Fig. 1-4 oberhalb der Aufnahme 22 für das Artikel-Oberteil 10 endet.

Das Gleitstück 23 trägt ferner eine es überragende, in der Montageplatte 3 geführte Schubstange 29. Deren oberes Ende ist mit einem Kontakt 30 eines Schalters 31 bestückt. Der obere Kontakt 30 wirkt zusammen mit einem unteren Kontakt 32 des Schalters 31. In der in Fig. 1-4 angebenen oberen Totpunktstellung des Stößels 24 ist der Schalter 31 aktiviert, das bedeutet, daß beide Kontakte 30, 32 gegeneinandertreten. Der obere Kontakt 30 beinhaltet eine nicht veranschaulichte Druckfeder, die den Kontaktvorsprung in Richtung des Kontaktvorsprunges des unteren Kontaktes 32 belastet. Es ist dabei eine begrenzte Verlagerbarkeit des oberen Kontaktvorsprunges vorgesehen. Getragen ist der untere Kontakt 30 von einem am Stößel 24 befestigten Ausleger 33. In Gegenüberlage zum Kontakt 32 stützt sich an dem Ausleger 33 eine Druckfeder 34 ab, die ihrerseits in einer maschinengestellseitigen Hülse 35 angeordnet ist.

Am oberen Ende trägt der Stößel 24 eine Laufrolle 36. Unter der Wirkung der Druckfeder 34 tritt die Laufrolle 36 gegen die umfangsseitige Lauffläche einer Kurvenscheibe 37. Aufgekeilt ist diese auf der Antriebswelle 38 eines elektromotorischen Antriebes 39. Während einer 360°-Drehung der Kurvenscheibe 37 wird demgemäß der Stößel 24 in Abwärtsrichtung und wieder in Aufwärtsrichtung bis zur oberen Totpunktstellung verlagert. In der oberen Totpunktstellung kann der Motor mittels einer Bremse kurzfristig angehalten werden. Soll in einer Sequenz in einem Arbeitsgang eine Vielzahl von Ansetzungen durchgeführt werden, wobei die Maschine bei einmaliger Betätigung des Fußschalters durchläuft, so ist vorgesehen, daß die Bremse den Antrieb in der Totpunktstellung stoppt, um so eine Taktratenreduzierung zu erzielen.

Der Ausleger 33 trägt ferner eine Steuerrolle 40. Gegen die Unterseite derselben tritt ein Arm 41 eines an der Montageplatte 3 um den Gelenkzapfen 42 gelagerten Hebels 43. In stumpfwinkliger Ausrichtung zum Arm 41 bildet der Hebel 43 einen schräg abwärts gerichteten Hebelarm 44 aus. Dessen Ende verläuft gemäß der Stellung in den Fig. 1-4 vertikal und ist dort mit einem Vertikalschlitz 45 versehen, in welchen ein Kulissenstein 46 eingreift. Der Kulissenstein 46 ist verbunden mit dem schlittenförmigen Ladeschieber 15, der seinerseits in einer maschinengestellseitigen Schlittenführung 47 beim Verschwenken des Hebels 43 verlagerbar ist. Das untere Ende des Hebelarmes 44 formt eine Steuerkante 48, an welcher sich eine Tastrolle 49 abstützt.

Letztere befindet sich am freien Ende eines Steuerhebels 50. Gelagert ist dieser um einen maschinengestellseitigen Bolzen 51. An einem Querarm 52 des Steuerhebels 50 greift eine Zugfeder 53 an, die den Steuerhebel 50 in Richtung einer Anlagestellung zum Hebel 43 belastet. Einhergehend wird dieser mit seinem Arm 41 in Anlagestellung zur Steuerolle 40 des Stößels 24 gezwungen.

In Gegenüberlage zur Tastrolle 49 bildet der Steuerhebel 50 eine nahe des Bolzens 51 angeordnete Steuerkurve 54 aus, die ihrerseits zusammenwirkt mit einem verdrehungsgesicherten Tastbolzen 55, welcher in einem seitlich ausladenden Querarm 56 eines Übertragungshebels 57 geführt ist. Der Tastbolzen 55 stützt sich über eine Übertragungs-Druckfeder 58 an einem gewindeeinstellbaren Gegenbolzen 59 am unteren Ende des etwa winkelförmig gestalteten Übertragungshebels 57 ab. Im Winkelscheitel ist der Übertragungshebel 57 um einen auslegerseitigen Querzapfen 60 gelagert. Das freie Ende des Übertragungshebels 57 erstreckt sich bis unterhalb des Unterwerkzeugs 5. Mit einem Winkelstück 61 greift der Übertragungshebel 57 formschlüssig in eine Ringnut 62 am unteren Ende des amboßförmigen Unterwerkzeuges 5 ein. Eine nahe des Gegenbolzens 59 angreifende Rückstellfeder 63 belastet den Übertragungshebel 57 derart, daß dessen Tastbolzen 55 sich am Steuerhebel 50 abstützt, und zwar gemäß Fig. 1-4 im Bereich vor der Steuerkurve 54.

Der Ausleger 33 ist sodann Träger einer Steuerleiste 64, welche mit dem Taster 65 eines maschinengestellseitig festgelegten Überbrückungsschalters 66 zusammenarbeitet.

Zum genauen Ansetzen der Artikel-Teile an die Textilie dient eine Projektionslampe 67. Diese ist maschinengestellseitig festgelegt und erzeugt beispielsweise auf der Oberseite der Textilie ein Fadenkreuz.

Die elektronische Steuereinheit zur Ansteuerung des Elektromotors 39 ist in den Zeichnungen nicht dargestellt. Sie besteht aus einer elektronischen Schaltung, auf der in bekannter Weise bekannte Module der Digitalelektronik miteinander kombiniert sind. Es kann ein Mikrocontroller oder ein Mikroprozessor vorgesehen sein und die zugehörigen Peripheriebausteiene. Es sind Eingabe/Programmiertasten vorgesehen. Des weiteren ist eine Anzeigevorrichtung in Form eines Displays vorgesehen. Mit der elektronischen Steuereinrichtung kann die Anzahl der in einer Sequenz erfolgenden Ansetzvorgänge eingegeben werden. Es ist ferner möglich, schrittweise die Wartezeit einzugeben, die der Antriebsmotor in der oberen Stößelposition verweilt. Hierzu sind Aufzähl-Abzähl-Tasten vorgesehen. Durch Betätigung dieser beiden Tasten läßt sich die Wartezeit in Zehn-Millisekunden-Schritten verstellen, und zwar in einem Bereich von 0-990 Millisekunden. Auf der Anzeige lassen sich die von der Vorrichtung insgesamt geleisteten Arbeitshübe darstellen. Hierzu ist in der elektronischen Steuereinheit ein Zählwerk vorgesehen. In der elektronischen Steuereinheit ist ein zweites Zählwerk vorgesehen, in welchem die innerhalb eines Zyklusses erfolgten Arbeitshübe festgehalten werden. Die jeweilige Anzahl kann dann ebenfalls auf der Anzeige angezeigt werden. Die elektronische Steuereinheit verfügt ferner über Einstellmittel, mit denen der jeweilige Motor-Nennstrom eingestellt werden kann.

Es stellt sich folgende Wirkungsweise ein:

Gemäß Fig. 1-4 nimmt der Stößel 24 aufgrund der entsprechend gedrehten Kurvenscheibe 37 die obere Totpunktstellung ein. Von der oberen Einschubleiste ist ein Artikel-Oberteil 10 an die Haltezange 18 übergeben worden, während die untere Einschubleiste 17 das Artikel-Unterteil 7 in das Unterwerkzeug 5 eingebracht hat.

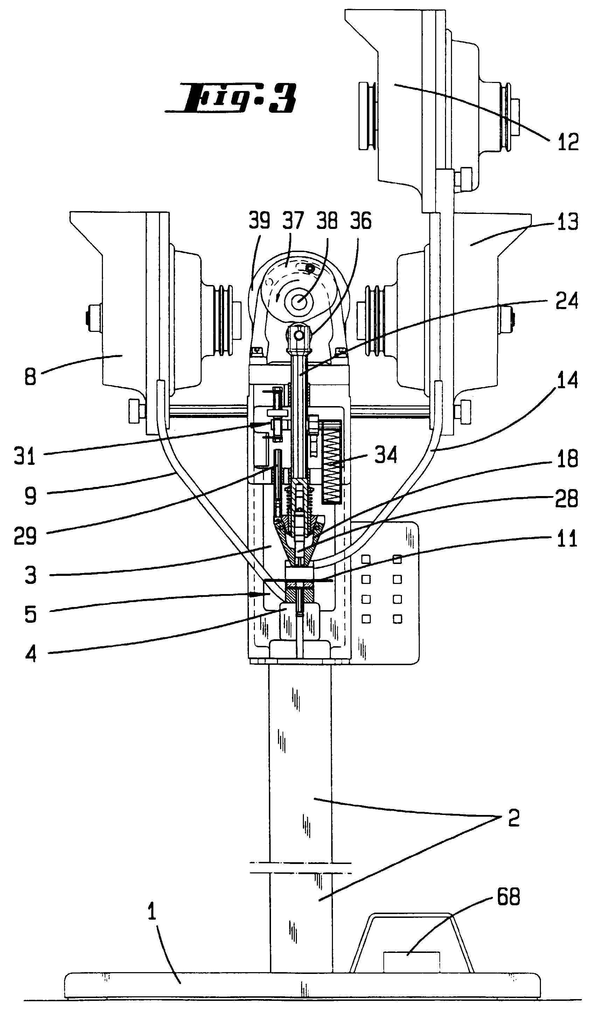

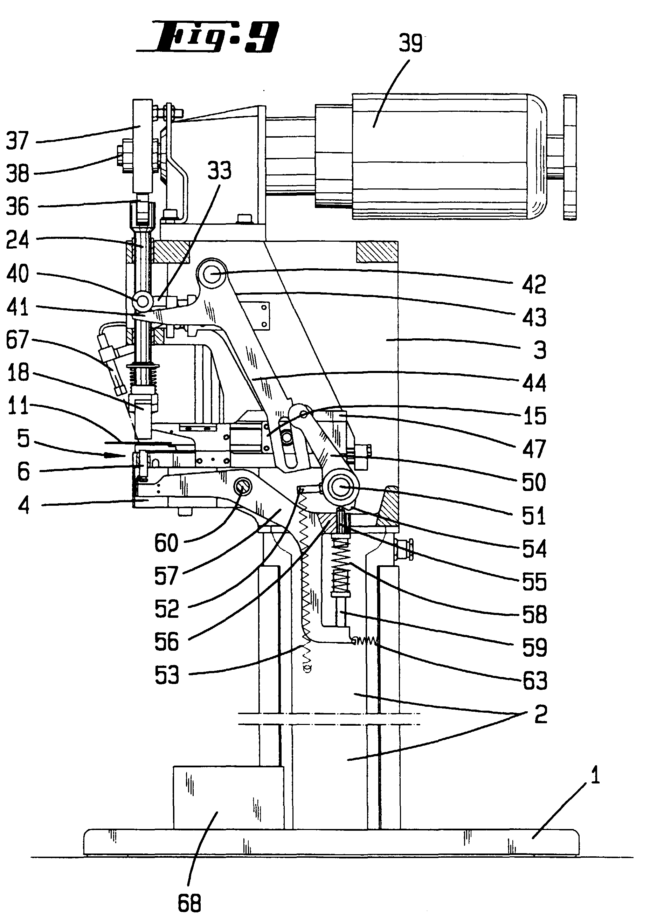

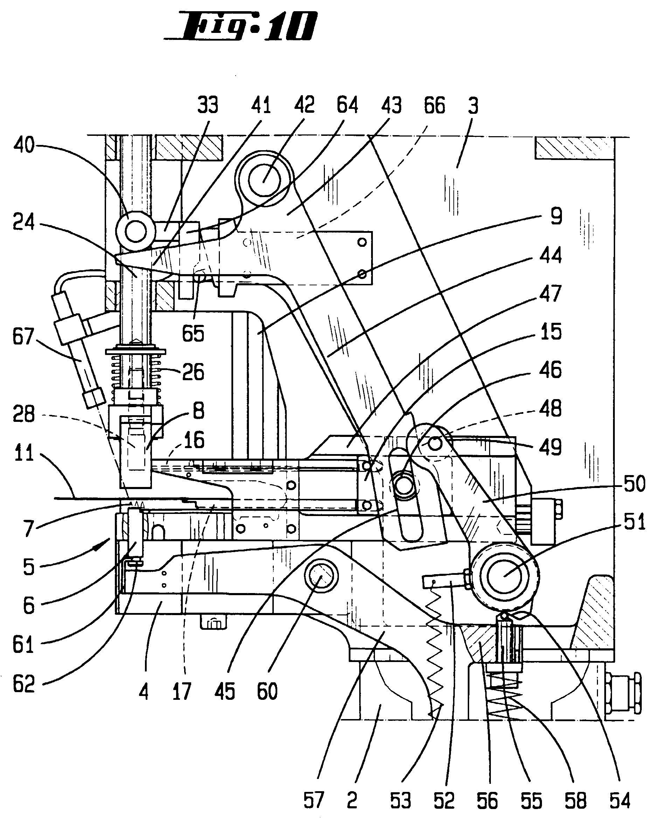

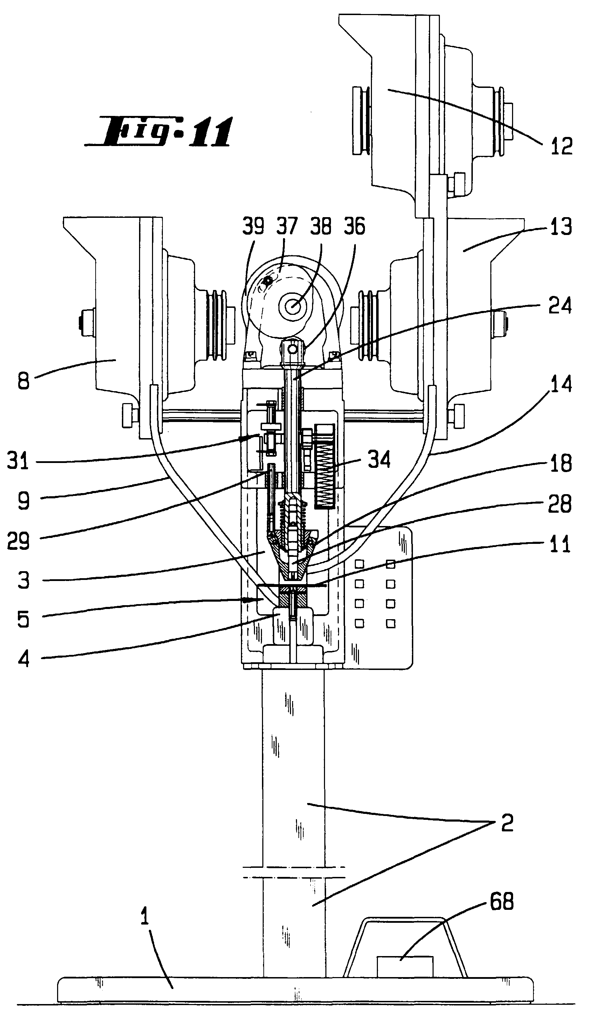

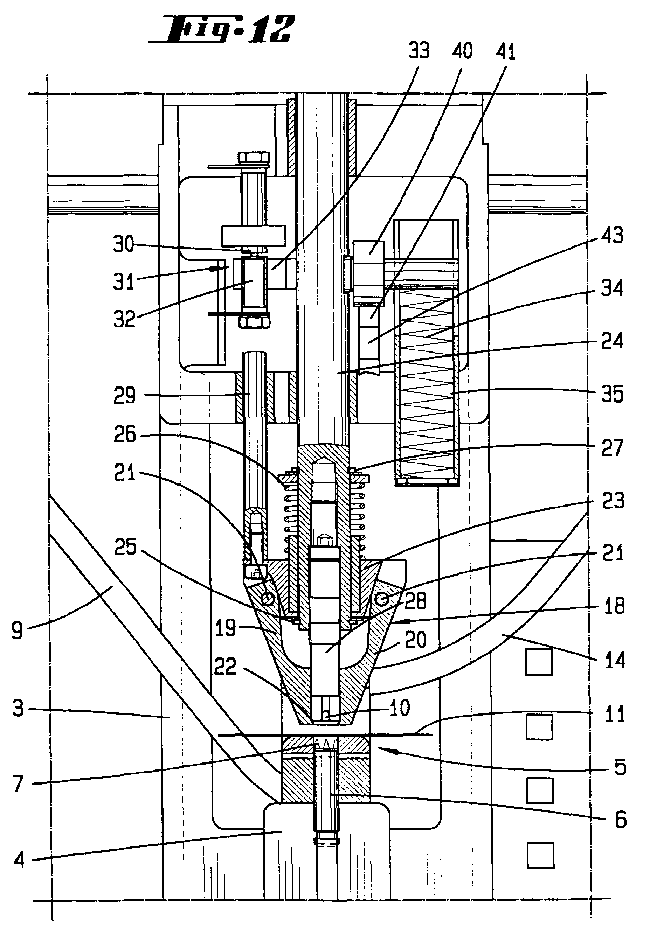

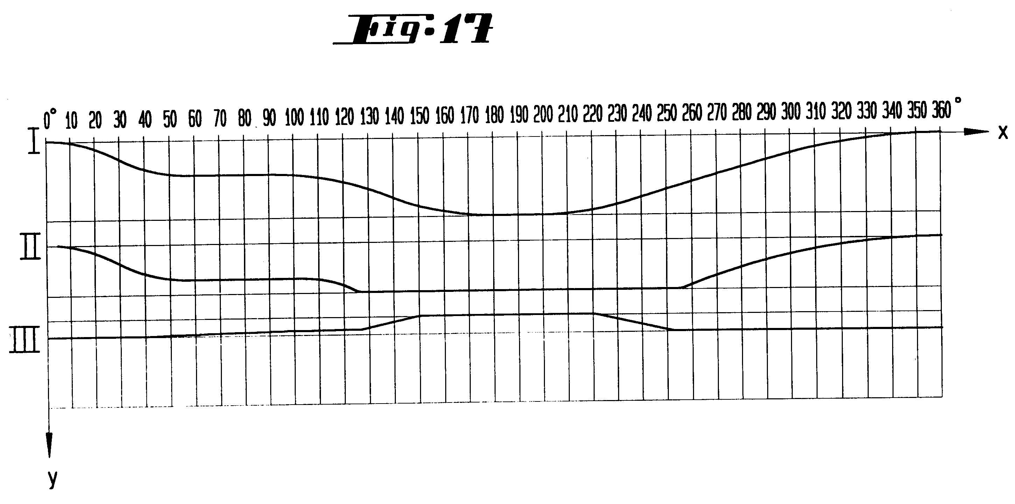

Durch Betätigung eines auf der Fußplatte 1 angeordneten Fußschalters 68 setzt der Antrieb ein verbunden mit einer Drehung der Kurvenscheibe 37 in Pfeilrichtung gemäß Fig. 3. Der Stößel 24 wird dadurch in Abwärtsrichtung verlagert. Aus dem Bewegungsdiagramm gemäß Fig. 17 geht hervor, daß der Stößel 24 (siehe Stößelkurve I) nach einer 60°-Drehung der Steuerkurve stehenbleibt. Dieser Stillstand erstreckt sich etwa bis zur 90°-Stellung der Steuerkurve 37. Bewegungsidentisch hat sich die Haltezange 18 in Abwärtsrichtung verlagert, siehe hierzu die Haltezangen-Kurve II in Fig. 17. Die Haltezange 24 befindet sich demgemäß in einer Abstandsstellung zum Unterwerkzeug 5, welcher Abstand etwa 4-5 mm entspricht und damit kleiner ist als die Dicke eines Fingers, vgl. hierzu die Fig. 9-12. Die Kontakte 30, 32 des Schalters 31 bleiben geschlossen, weil keine Relativverlagerung zwischen Haltezange und Stößel 24 stattgefunden hat.

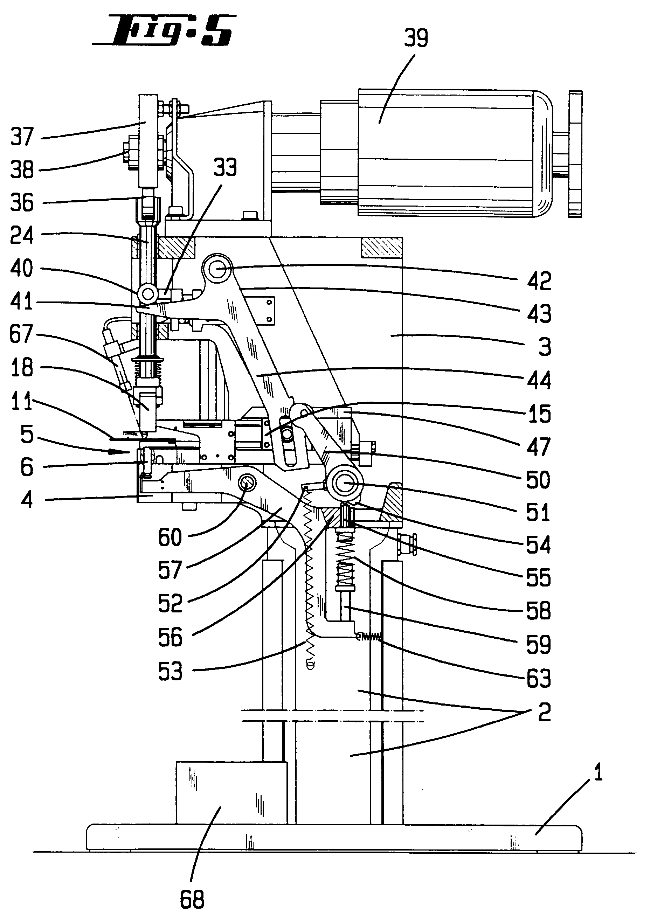

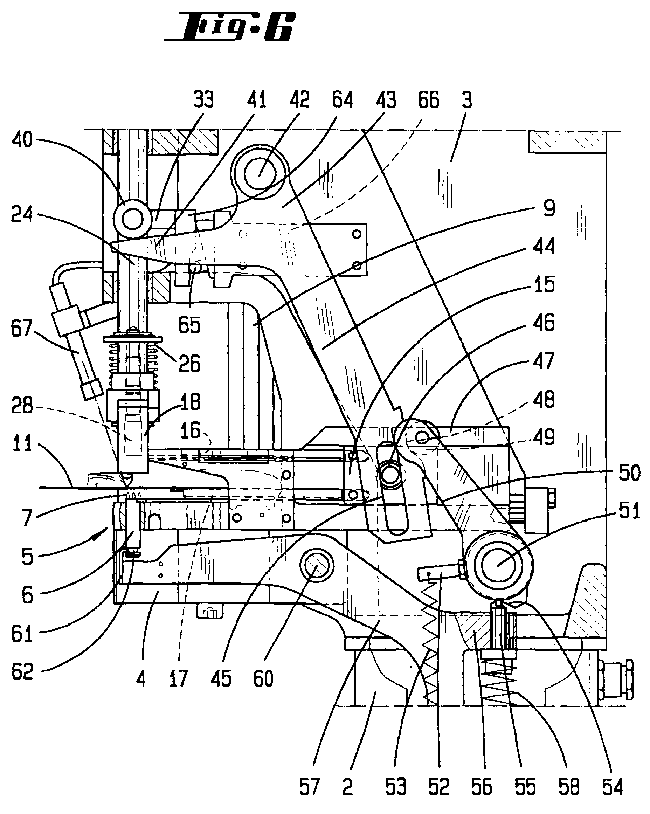

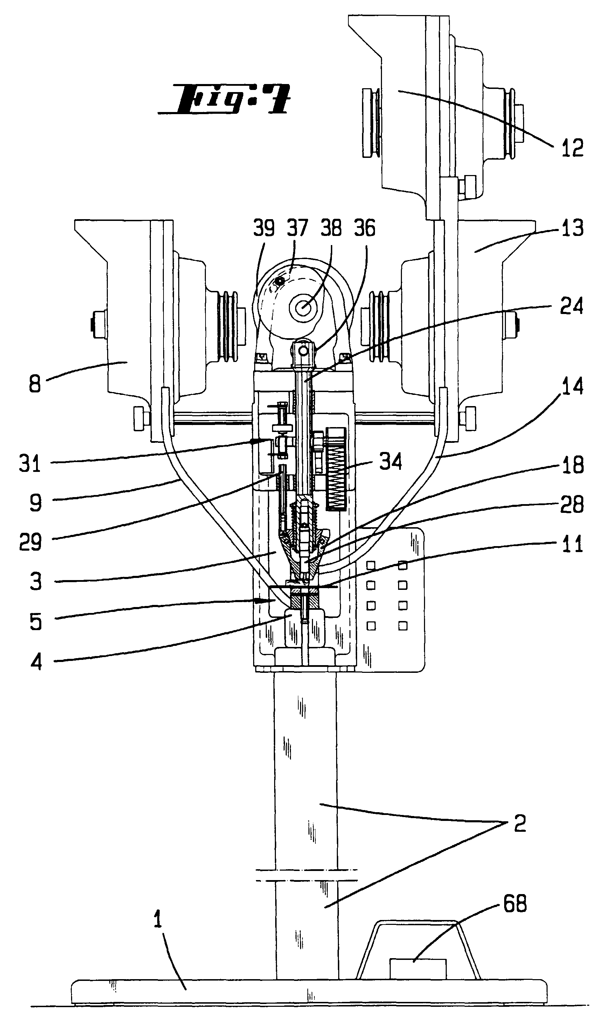

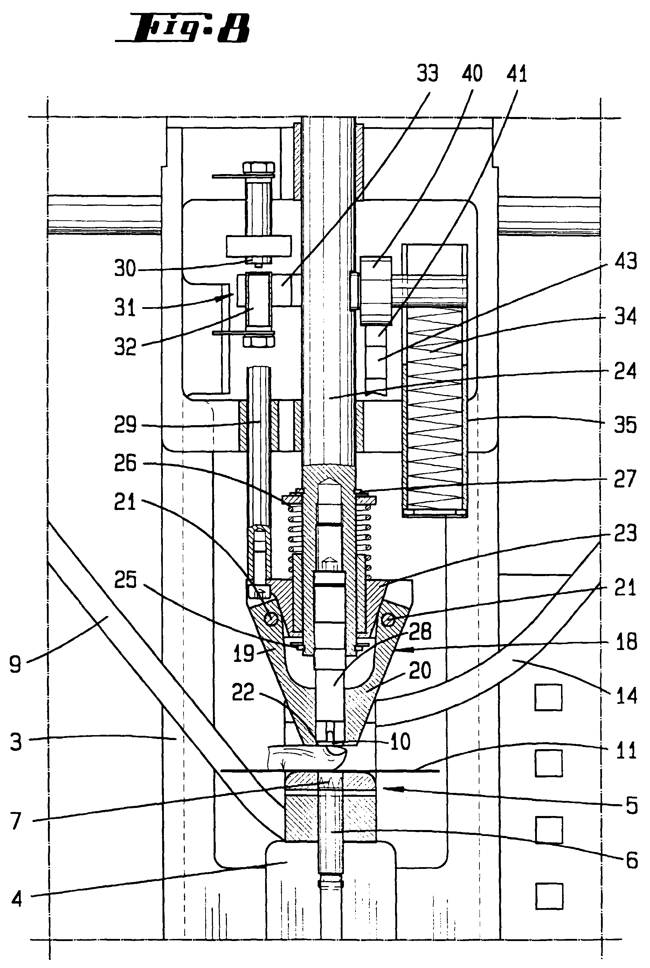

Es kann jedoch der Fall eintreten, daß sich zwischen dem Unterwerkzeug 5 und der Haltezange 18 der Finger einer Bedienungsperson erstreckt, vergleiche Fig. 5-8. Die Haltezange 18 setzt demgemäß auf dem Finger auf, bleibt stehen, während sich der Stößel 24 weiter in Abwärtsrichtung verlagert. Infolge der dann auftretenden Relativverlagerung von Stößel 24 zur Haltezange 18 öffnen die Kontakte 30, 32 des Schalters 31 und setzen unverzüglich den Antrieb still. Hierzu wird der Motor abgebremst. Während dieser Relativverlagerung von Haltezange 18 und Stößel 24 wird die Schraubendruckfeder 26 nur unwesentlich gespannt, so daß keine Verletzungsgefahr für den Finger besteht.

Einhergehend mit der Abwärtsbewegung des Stößels 24 beaufschlagt die Steuerolle 40 den Arm 41 des Hebels 43 und verschwenkt diesen entgegen Uhrzeigerrichtung verbunden mit einer Mitnahme des Ladeschiebers 15 mit den daran sitzenden Einschubleisten 16, 17. Der Hebelarm 44 des Hebels 43 beaufschlagt während dieses Vorganges die Tastrolle 49 des Steuerhebels 50 und schwenkt diesen in Uhrzeigerrichtung einhergehend damit, daß der Tastbolzen gegen die Steuerkurve 54 tritt. Dadurch wird der Übertragungshebel 57 über die Übertragungsfeder 58 verschwenkt, so daß eine Aufwärtsbewegung des Unterwerkzeuges 5 etwa zeitgleich mit dem Stillstehen der Haltezange 18 und des Stößels 24 eintritt. Die Unterwerkzeug-Kurve III zeigt die Aufwärtsbewegung des Unterwerkzeugs in einem leichten Anstieg, welcher etwa bei 50° beginnt und etwa bei 130° endet, bezogen auf die Drehung der Kurvenscheibe 37.

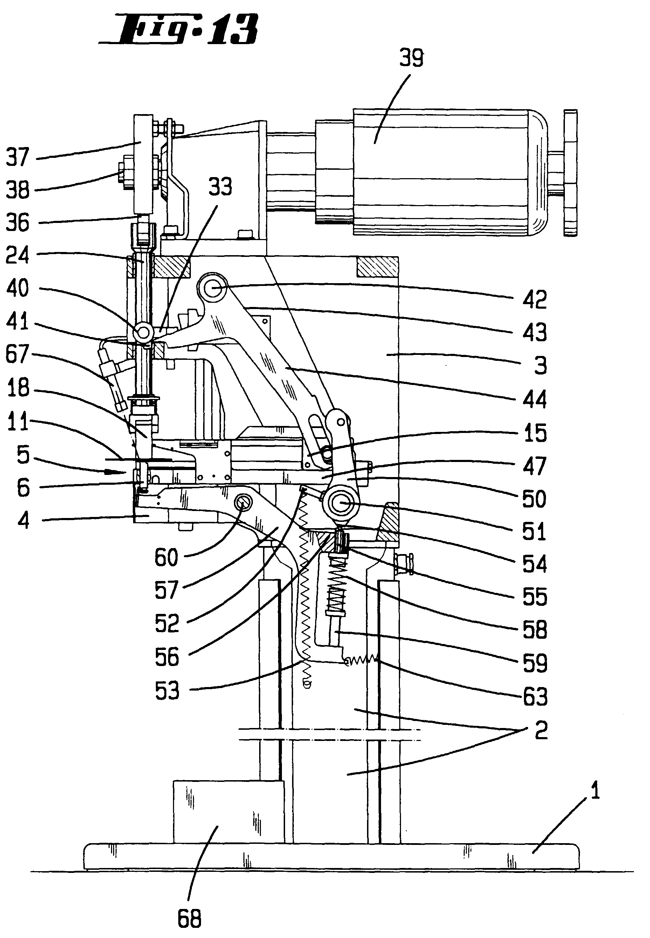

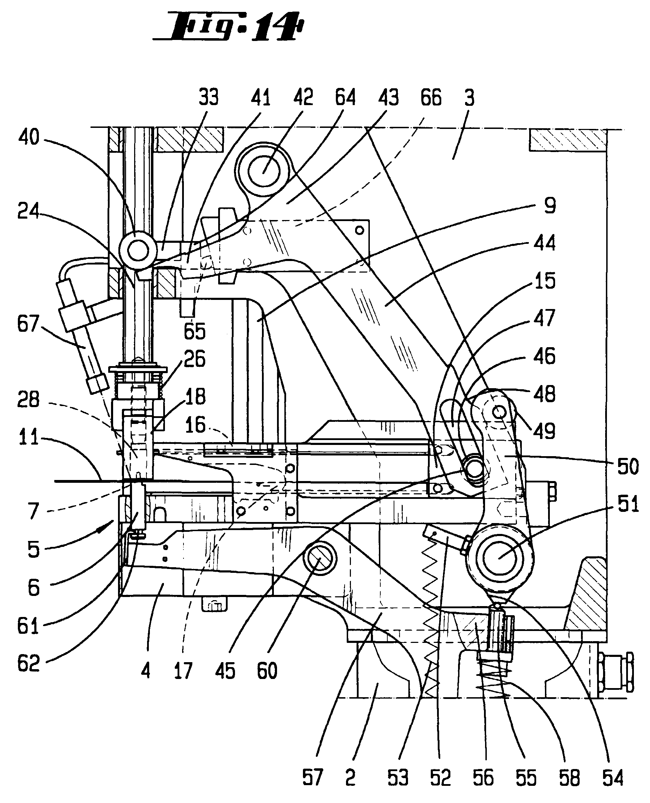

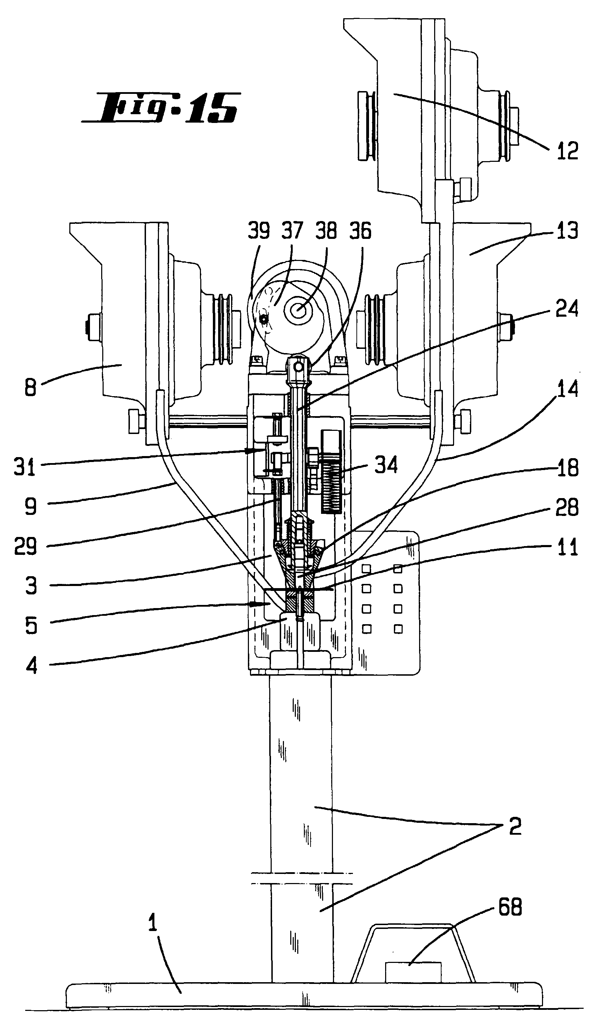

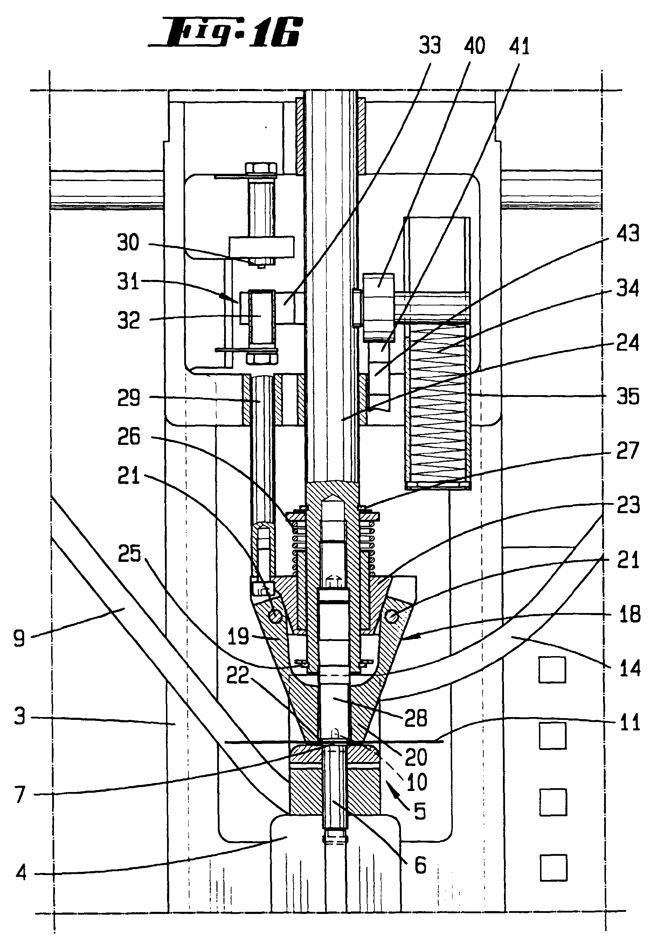

Bei Erreichen einer 90°-Drehstellung der Kurvenscheibe 37 setzt die zweite Absenkbewegung des Stößels 24 und damit der Haltezange 18 ein. Letztere setzt auf die Oberseite der Textilie 11 auf, während der Stößel 24 sich weiter in Abwärtsrichtung bewegt. Das Aufsetzen der Haltezange findet gemäß Bewegungsdiagramm etwa bei 125° statt. Der weiter sich abwärts bewegende Stößel führt zu einer Relativverlagerung zwischen Haltezange 18 und Stößel 24 verbunden mit einem Öffnen des Schalters 31. Dennoch wird der Antrieb nicht stillgesetzt, weil der maschinengestellseitige Überbrückungsschalter 66 von der Steuerleiste 64 betätigt wird. Dies geschieht vom Stößel zu Beginn der zweiten Absenkbewegung, so daß trotz geöffneter Kontakte 30, 32 des Schalters 31 der Antrieb nicht unterbrochen wird. Es findet im Bereich zwischen der 180°- bis 200°-Drehung das Vernieten des Artikel-Unterteils 7 mit dem Artikel-Oberteil 10 statt, siehe Fig. 13-16. Das Bewegungsdiagramm in Fig. 17 deutet anhand der Unterwerkzeug-Kurve III an, daß sich an die leicht ansteigende Aufwärtspositionierbewegung bis etwa 125°-Drehung der Kurvenscheibe 37 eine steil ansteigende Aufwärtsbewegung stattfindet. Die Zacken des Artikel-Unterteils 7 durchstoßen dabei die Textilie 11. Die höchste Position des Unterwerkzeugs 5 wird danach etwa über 70° bei einer 360°-Drehung der Kurvenscheibe 37 gehalten, wobei zeitgleich auch das Vernieten der Knopfteile stattfindet. In der Nietstellung hat sich ferner der Ladeschieber 15 so weit verlagert, daß die Einschubleisten 16, 17 vor den zugeführten Artikelteilen liegen und bei Fortsetzung der Drehung der Kurvenscheibe 37 in die Werkzeuge eingebracht werden.

In der 360°-Stellung bleibt der Elektromotor für eine voreingestellte Wartezeit stehen. Nach Verstreichen der im Millisekungenbereich liegenden Wartezeit beginnt der Arbeitszyklus des Stößels gemäß Fig. 1-4 erneut. Ein endgültiges Abschalten des Motors erfolgt nur, wenn während einer Sequenz einer Vielzahl von Arbeitszyklen der Fußschalter nicht mehr betätigt wird, oder der Fingerschutz aktiviert wird. Ansonsten stoppt der Motor selbsttätig, wenn die einer Sequenz zugehörige Anzahl von Arbeitszyklen abgearbeitet ist.

Es kann vorgesehen sein, daß im Unter- bzw. Oberwerkzeug verschiedene Artikel hintereinander angeordnet sind, so daß innerhalb einer Sequenz hintereinander unterschiedliche Artikel angesetzt werden. Es kann vorgesehen sein, daß jedem Artikel oder jedem Zyklus einer Sequenz eine individuelle Wartezeit zugeordnet werden kann.

Es ist noch zu erwähnen, daß beim Aufsetzen der Haltezange 18 auf die Textilie 11 die Abwärtsverlagerung des Stößels 24 über das Oberwerkzeug die Abwärtsverlagerung des Artikel-Oberteils 10 erzwingt, welches über entsprechende, der Aufnahme 22 nachgeordnete Schrägen der Zangenbacken 19, 20 deren Aufspreizung entgegen Federbelastung erzwingt.

Mit der Aufwärtsbewegung des Stößels schließt ferner der Schalter 31, während der Überbrückungsschalter 66 öffnet.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Vorrichtung zum Ansetzen von Nieten, Knöpfen oder dergleichen an Textilien oder dergleichen, mit einem den Niethub ausführenden Stößel (24), dessen Auf- und Abwärtsbewegung durch das Zusammenwirken des oberen Ende des Stößels mit einer von einem Elektromotor 39 drehangetriebenen Kurvenscheibe gesteuert ist, wobei bei Betätigung eines Schalters oder dergleichen die Vorrichtung eine Sequenz von Ansetzungen durchführt, gekennzeichnet durch eine elektronische Steuereinheit, welche den mit einer fest voreingestellten Winkelgeschwindigkeit laufenden Elektromotor (39) zur Reduzierung der Taktfrequenz des Stößelhubes (24) in der oberen Totpunktstellung kurzfristig abschaltet, welcher Elektromotor (39) mittels einer Bremsvorrichtung oder dergleichen getoppt und nach Ablauf der vorprogrammierten Wartezeit wieder angeschaltet wird.

2. Vorrichtung nach Anspruch 1, dadurch gekennzeichnet, daß die Steuereinheit eine Aufzähl- und eine Abzähltaste aufweist, durch deren Betätigung die Wartezeit schrittweise einstellbar ist.

3. Vorrichtung nach einem der vorhergehenden Ansprüche, dadurch gekennzeichnet, daß die Wartezeit in Zehn-Millisekunden-Schritten in einem Bereich von 0-990 Millisekunden einstellbar ist.

4. Vorrichtung nach einem der vorhergehenden Ansprüche, dadurch gekennzeichnet, daß die elektronische Steuereinheit einen Mikro-Controller oder Mikro-Prozessor aufweist.

5. Vorrichtung nach einem der vorhergehenden Ansprüche, dadurch gekennzeichnet, daß die elektronische Steuereinheit einen ersten Zähler zur Anzeige der in einer Ansetzsequenz durchgeführten Ansetzungen und einen zweiten Zähler zur Anzeige oder von der Vorrichtung insgesamt geleisteten Arbeitshübe aufweist.

6. Vorrichtung nach einem der vorhergehenden Ansprüche, dadurch gekennzeichnet, daß mittels der elektronischen Steuereinheit der Motor-Nennstrom programmierbar ist.

## Claims

1. A device for fitting rivets, buttons or the like to textiles or the like, the device having a ram (24), the ram performing a riveting stroke, the upward and downward movement of the ram being controlled by cooperation of the upper end of the ram with a cam driven in rotation by an electric motor (39), the device performing a series of fitting movements when a switch or the like is actuated, characterised by an electronic control unit, the control unit briefly switching off the electric motor (39) in the top dead centre position in order to reduce the beat frequency of the ram stroke (24), the electric motor running at a fixedly preset angular speed, the electric motor (39) being stopped by means of a braking device or the like and being switched on again when the pre-programmed waiting time has expired.

2. A device according to Claim 1, characterised in that the control unit has a count-up key and a count-down key, by actuation of which the waiting time is adjustable in stepwise manner.

3. A device according to one of the preceding claims, characterised in that the waiting time is adjustable in steps of 10 milliseconds in a region from 0 to 990 milliseconds.

4. A device according to one of the preceding claims, characterised in that the electronic control unit has a microcontroller or microprocessor.

5. A device according to one of the preceding claims, characterised in that the electronic control unit has a first counter for indicating the fitting movements carried out in a fitting sequence and a second counter for indicating the working strokes performed in total by the device.

6. A device according to one of the preceding claims, characterised in that the rated current of the motor is programmable by means of the electronic control unit.

## Revendications

1. Dispositif pour poser des rivets, des boutons ou analogues sur des textiles ou analogues, avec un poinçon (24) effectuant la course de rivetage, dont le mouvement de levée et de descente est commandé par la coopération entre l'extrémité supérieure du poinçon et un disque de came entraîné en rotation par un moteur électrique (39), le dispositif effectuant une séquence de poses en cas d'actionnement d'un interrupteur ou analogue, caractérisé par une unité de commande électronique, qui met hors service pour une courte durée le moteur électrique (39) tournant à une vitesse angulaire fixe, préréglée, pour réduire la fréquence de cadencement de la course de poinçon (24), dans la position de point mort supérieur, ce moteur électrique (39) étant stoppé au moyen d'un organe de freinage ou analogue et étant remis en service après écoulement d'un temps d'attente préprogrammé.

2. Dispositif selon la revendication 1, caractérisé en ce que l'unité de commande présente une touche de comptage additif et une touche de comptage soustractif, au moyen de l'actionnement desquelles le temps d'attente est réglable, par pas.

3. Dispositif selon l'une des revendications précédentes, caractérisé en ce que le temps d'attente est réglable par pas de dix millisecondes dans une plage de 0 à 990 millisecondes.

4. Dispositif selon l'une des revendications précédentes, caractérisé en ce que l'unité de commande électronique présente un microcontrôleur ou un microprocesseur.

5. Dispositif selon l'une des revendications précédentes, caractérisé en ce que l'unité de commande électronique présente un premier compteur, pour afficher les poses (de rivet) effectuées lors d'une séquence de poses, et un deuxième compteur pour afficher les courses de travail réalisées globalement par le dispositif.

6. Dispositif selon l'une des revendications précédentes, caractérisé en ce que le courant nominal du moteur est programmable au moyen de l'unité de commande électronique.
